# EUROPEAN PATENT APPLICATION

(11) **EP 4 266 335 A1**
(43) Date of publication of application: **25.10.2023**
(21) Application number: 21936627.5
(22) Date of filing: 30.06.2021
(51) Int. Cl.: H01F 41/02, H01F 7/02, H01F 1/147

(54) **SOFT MAGNETIC ALLOY MAGNETIC SHEET, PREPARATION METHOD THEREFOR AND USE THEREOF**

(30) Priority: 13.04.2021 CN 202110394068
(71) Applicant: Hengdian Group DMEGC Magnetics Co., Ltd., Jinhua, Zhejiang 322118 (CN)
(72) Inventor: ZHU, Quan, Jinhua, Zhejiang 322118 (CN); YU, Yangdong, Jinhua, Zhejiang 322118 (CN); WANG, Leijie, Jinhua, Zhejiang 322118 (CN); YI, Kang, Jinhua, Zhejiang 322118 (CN); WANG, Fei, Jinhua, Zhejiang 322118 (CN)
(74) Representative: Ricker, Mathias
(86) International application number: PCT/CN2021/103457
(87) International publication number: WO 2022/217755

(57) **Abstract**

The present application provides a soft magnetic alloy magnetic sheet, a preparation method therefor and a use thereof. The preparation method comprises the following steps: (1) mixing thermosetting resin, thermoplastic resin, a solvent, a curing agent, and soft magnetic alloy powder having insulating coating to obtain casting slurry; and (2) carrying out degassing and casting-drying treatment on the casting slurry in step (1) in sequence to obtain the soft magnetic alloy magnetic sheet.

## Description

### TECHNICAL FIELD

The present application relates to the technical field of magnetic materials, and relates to a soft magnetic alloy sheet, a preparation method therefor and use thereof.

### BACKGROUND

With the rapid development of electronics and electric power, the demand for high-power and high-current inductors is growing. In the high-power and high-current applications, alloy magnetic materials with low loss, low cost and high conversion efficiency increasingly attract more interests.

The trend of electronic miniaturization and integration is gradually emerging, and the traditional winding and integral molding process cannot completely meet the development requirements, so the development of thin film power inductor has become an inevitable trend. And it is difficult to sinter the insulation-coated soft magnetic alloy powder at high temperature without destroying the insulation coating layer. For this reason, the present application develops a soft magnetic alloy sheet to be applied to the production of thin film power inductor, the main feature of which is that it does not need to be sintered at a high temperature of 600-800°C, only needs to be baked at a low temperature to be cured, and can reach the high temperature resistance requirements above 160°C after being cured,.

At present, the preparation process of the soft magnetic alloy sheet is similar to the slurry making and tape casting process for the preparation of LTCC raw tape. However, LTCC densifies the magnet by low-temperature sintering, the slurry generally uses the thermoplastic resin as a binder, the dielectric ceramic powder used has a low density, and the slurry made is more difficult to settle compared with soft magnetic alloys, so the process is relatively easy.

CN110790568A discloses a low dielectric LTCC raw ceramic tape and a preparation method therefor and use thereof, which is composed of a powder, a solvent, a dispersant, a binder and a plasticizer; a mass fraction of the powder is 40-60%, which is prepared by 10-40wt% of glass material, 1-10wt% of low-melting oxide sintering additive and a remainder of ceramic material, and a chemical composition of the ceramic material is Zn₂₋ₓSiO₄₋ₓ, wherein x = 0.05-0.3.

CN108623288A discloses a beryllium oxide ceramic slurry for tape casting and a production method thereof. In view of the problem that the beryllium oxide ceramic slurry for tape casting and preparation method thereof have not been found by the existing technology and it is hard to prepare the beryllium oxide ceramic with better performances, this document provides a beryllium oxide ceramic slurry for tape casting, and the composition of the slurry is: by the weight percent, the powder of 50-70%, and the organic solvent of 30-50%; the powder is a mixture of beryllium oxide powder, silica powder and magnesium oxide powder, the organic solvent is a mixture of phthalate, toluene, butanone, isopropanol, a phosphate anionic emulsifier and polyvinyl butyral.

The above two documents individually introduce a formula of a raw ceramic tape and a preparation method thereof, but the prepared magnetic sheets need to be sintered at a high temperature, the formula belongs to the thermoplastic system, and the solid content is low, and the formula and casting process are relatively simple.

Therefore, it is an urgent technical problem to be solved about how to obtain a soft magnetic alloy sheet, which has high saturation magnetic induction strength, low loss, and a certain hardness and high-temperature resistance.

### SUMMARY

An object of the present application is to provide a soft magnetic alloy sheet, a preparation method therefor and use thereof. By mixing a thermosetting resin and other additives with a soft magnetic alloy powder and by casting-drying, a soft magnetic alloy sheet is obtained in the present application, which has high saturation magnetic induction strength, low loss, a certain hardness and temperature resistance above 160°C. Its advantage is that by using the high temperature curing characteristic (generally at 150-220°C) of thermosetting resin, the magnetic sheet achieves hardening, avoiding the problem of increased loss caused by the failure of the insulation coating layer after high-temperature sintering in the traditional lamination process.

To achieve the above object, the present application uses the following technical solutions.

In a first aspect, the present application provides a preparation method for a soft magnetic alloy sheet, including the following steps:
(1) mixing a thermosetting resin, a thermoplastic resin, a solvent, a curing agent and a insulation-coated soft magnetic alloy powder to obtain a casting slurry;
(2) subjecting the casting slurry in step (1) to degassing and casting-drying treatment in turn to obtain the soft magnetic alloy sheet.

In the present application, an insulation coating of the soft magnetic alloy powder includes coating the soft magnetic powder with silica and phosphoric acid solution, wherein a medium particle size of silica is less than 1 µm, such as 0.5 µm, 0.6 µm, 0.7 µm, 0.8 µm or 0.9 µm, etc. The advantage of the insulation-coated soft magnetic alloy powder is that the resistivity of the prepared magnetic sheet is greatly improved, the eddy current loss of the product is effectively reduced, and the prepared thin film power inductor electrodes do not suffer from overplating at the same time.

The preparation method is provided in the present application, and by combining a thermosetting resin, a thermoplastic resin and an insulation-coated soft magnetic alloy powder, on the one hand, the high temperature curing characteristic of the thermosetting resin is used, so that the magnetic sheet achieves hardening, avoiding the problem of increased loss caused by the failure of the insulation coating layer after high-temperature sintering in the traditional lamination process; on the other hand, the thermoplastic resin plays the role of bridging and cross-linking the soft magnetic alloy powder and the thermosetting resin. The three materials synergize with each other, the casted magnetic sheet is easier to form a film, and has a flexible texture, and the cured magnetic sheet can also maintain the strength even at 160°C; at the same time, the casting process is used to make the film thickness of the magnetic sheet uniform, and the magnetic sheet not only maintains a certain degree of flexibility and ductility, but also avoids being too brittle. Meanwhile, the formula used in the present application can give a high solid content to slurry, thus avoiding improper casting process, which might result in poor film strength or even the failure in film formation, or the formed film is too brittle to be wound or to be processed subsequently. The soft magnetic alloy sheet prepared by the preparation method provided in the present application has high saturation magnetic induction strength and low loss, and it has a certain hardness and can withstand temperature above 160°C after being fully cured.

In the present application, the soft magnetic alloy powder is selected instead of other materials such as ferrite, because the soft magnetic alloy powder has a greater saturation magnetic flux density, which is more conducive to passing large current, and for the preparation of power inductors working at a high current, it has an advantage that ferrites cannot match. And the magnetic permeability of ferrite will drop sharply when the frequency is about 1 MHz or more, and the loss will rise sharply. However, the soft magnetic alloy material can still maintain high permeability and low loss at above 100 MHz, which conforms to the trend of high-frequency applications.

In the present application, if the thermosetting resin is not added for preparing the casting slurry, it is impossible to realize the effect that the prepared magnetic sheet remains in a hardened state at a high temperature of 160°C by heating and curing, and the requirement of power inductor being used in specific high-temperature conditions cannot be satisfied. If the thermoplastic resin is not added, the casting slurry is not easy to form a film, and the film produced has poor film flexibility, which is not easy to wind and cut.

Optionally, the casting slurry in step (1) further includes any one or a combination of at least two of a plasticizer, a dispersant or a curing accelerator.

Optionally, in the casting slurry in step (1), a weight proportion of the insulation-coated soft magnetic alloy powder is 82-91wt%, such as 82wt%, 83wt%, 85wt%, 86wt%, 87wt%, 88wt%, 89wt%, 90wt% or 91wt%, etc., optionally 85-91wt%.

In the present application, the weight of the insulation-coated soft magnetic alloy powder is a solid content of the casting slurry, and a weight proportion of the insulation-coated soft magnetic alloy powder being 85-91wt% is more conducive to ensuring that the magnetic sheet has a high magnetic conductivity.

Optionally, in the casting slurry in step (1), a weight proportion of the thermosetting resin is 1.5-4wt%, such as 1.5wt%, 2wt%, 3wt% or 4wt%, etc.

Optionally, in the casting slurry in step (1), a weight proportion of the thermoplastic resin is 1-2wt%, such as 1wt%, 1.2wt%, 1.4wt%, 1.5wt%, 1.6wt%, 1.8wt% or 2wt%, etc.

Optionally, in the casting slurry in step (1), a weight proportion of the dispersant is 0-0.6wt%, such as 0wt%, 0.3wt%, 0.4wt%, 0.5wt% or 0.6wt%, etc.

Optionally, in the casting slurry in step (1), a weight proportion of the solvent is 6-10wt%, such as 6wt%, 7wt%, 8wt%, 9wt% or 10wt%, etc.

Optionally, in the casting slurry in step (1), a weight proportion of the curing agent is 0.5-0.7wt%, such as 0.5wt%, 0.6wt% or 0.7wt%, etc.

Optionally, in the casting slurry in step (1), a weight proportion of the plasticizer is 0-0.6wt%, such as 0wt%, 0.3wt%, 0.4wt%, 0.5wt% or 0.6wt%, etc.

Optionally, in the casting slurry in step (1), a weight proportion of the curing accelerator is 0-0.25wt%, such as 0wt%, 0.1wt%, 0.15wt%, 0.25wt% or 0.25wt%, etc.

Optionally, the thermosetting resin in step (1) includes a bisphenol A epoxy resin and/or a bisphenol F epoxy resin.

Optionally, the thermoplastic resin in step (1) includes polyvinyl butyral and/or polymethyl methacrylate.

Optionally, the dispersant in step (1) includes any one or a combination of at least two of castor oil, industrial fish oil or glyceryl trioleate.

Optionally, the solvent in step (1) includes any one or a combination of at least two of absolute ethanol, isopropanol, ethyl acetate or butanone.

Optionally, the curing agent in step (1) includes any one or a combination of at least two of m-xylylenediamine, isophorone diamine, diethyltoluenediamine or dicyandiamide.

Optionally, the plasticizer includes any one or a combination of at least two of dioctyl phthalate, dibutyl phthalate, or a polyether compound having a plurality of hydroxyl functional groups.

In the present application, the polyether compound having a plurality of hydroxyl functional groups refers to a hydroxyl polyether compound with a hydroxyl value mgKOH/g of 200-300.

Optionally, the curing accelerator includes any one or a combination of at least two of 2-methylimidazole, 2-ethyl-4-methylimidazole or salicylic acid.

Optionally, a medium particle size of the soft magnetic alloy powder in the insulation-coated soft magnetic alloy powder in step (1) is 4-15 µm, such as 4 µm, 5 µm, 6 µm, 7 µm, 8 µm, 9 µm, 10 µm, 11 µm, 12 µm, 13 µm, 14 µm or 15 µm, etc.

The soft magnetic alloy powder provided in the present application has a high density, and is easy to settle.

Optionally, the soft magnetic alloy powder in the insulation-coated soft magnetic alloy powder in step (1) includes any one or a combination of at least two of an iron-nickel powder, an iron-silicon-aluminum powder or an iron-silicon-chromium powder.

Optionally, a vacuum degree of the degassing in step (2) is -0.07 MPa to -0.096 MPa, such as - 0.07 MPa, -0.08 MPa, -0.09 MPa or -0.096 MPa, etc.

Optionally, a time of the degassing in step (2) is 5-20 min, such as 5 min, 10 min, 15 min or 20 min, etc.

Optionally, a viscosity of the degassed slurry in step (2) is 2000-3000 cps, such as 2000 cps, 2500 cps or 3000 cps, etc.

Optionally, a stirring speed of a feeding system for the casting treatment in step (2) is 3-5 rpm/min, such as 3 rpm/min, 4 rpm/min or 5 rpm/min, etc.

In the present application, the slurry is stirred to guarantee uniformity during the casting process.

Optionally, a thickness of the soft magnetic alloy sheet is 75-200 µm, such as 75 µm, 80 µm, 90 µm, 100 µm, 110 µm, 120 µm, 130 µm, 140 µm, 150 µm, 160 µm, 170 µm, 180 µm, 190 µm or 200 µm, etc.

Optionally, a moving speed of the casting treatment in step (2) is 0.15-0.45 m/min, such as 0.15 m/min, 0.2 m/min, 0.25 m/min, 0.3 m/min, 0.35 m/min, 0.4 m/min or 0.45 m/min, etc.

Optionally, a blade clearance of the casting treatment in step (2) is 180-280 µm, such as 180 µm, 200 µm, 210 µm, 220 µm, 230 µm, 240 µm, 250 µm, 260 µm, 270 µm or 280 µm, etc.

Optionally, for the thickness of the soft magnetic alloy sheet being 75-85 µm, such as 75 µm, 76 µm, 77 µm, 78 µm, 79 µm, 80 µm, 81 µm, 82 µm, 83 µm, 84 µm or 85 µm, etc., the blade clearance of the casting treatment is 180-220 µm, such as 180 µm, 190 µm, 200 µm, 210 µm or 220 µm, etc., and the moving speed is 0.3-0.45 m/min, such as 0.3 m/min, 0.35 m/min, 0.4 m/min or 0.45 m/min, etc.

Optionally, for the thickness of the soft magnetic alloy sheet being 95-105 µm, such as 95 µm, 96 µm, 97 µm, 98 µm, 99 µm, 100 µm, 101 µm, 102 µm, 103 µm, 104 µm or 105 µm, etc., the blade clearance of the casting treatment is 200-240 µm, such as 200 µm, 210 µm, 220 µm, 230 µm or 240 µm, etc., and the moving speed is 0.2-0.35 m/min, such as 0.2 m/min, 0.25 m/min, 0.3 m/min, or 0.35 m/min, etc.

Optionally, for the thickness of the soft magnetic alloy sheet being 115-125 µm, such as 115 µm, 116 µm, 117 µm, 118 µm, 119 µm, 120 µm, 121 µm, 122 µm, 123 µm, 124 µm or 125 µm, etc., the blade clearance of the casting treatment is 230-280 µm, such as 230 µm, 240 µm, 250 µm, 260 µm, 270 µm or 280 µm, etc., and the moving speed is 0.15-0.25 m/min, such as 0.15 m/min, 0.2 m/min or 0.25 m/min, etc.

In the present application, in order to obtain different thicknesses of magnetic sheets, the blade clearance and the moving speed should be adjusted, so as to ensure that the film thickness of the magnetic sheet obtained by casting is uniform, the magnetic sheet does not crack or shrink in the subsequent drying process, and the film is flexible and not brittle.

Optionally, an inlet-outlet air volume in the drying process is 0.2-0.25 m³/min, such as 0.2 m³/min, 0.21 m³/min, 0.22 m³/min, 0.23 m³/min, 0.24 m³/min or 0.25 m³/min, etc.

Optionally, the drying treatment includes performing a first temperature zone drying, a second temperature zone drying and a third temperature zone drying sequentially.

Optionally, a temperature of the first temperature zone drying is 25-35°C, such as 25°C, 30°C or 35°C, etc.

Optionally, a temperature of the second temperature zone drying is 50-65°C, such as 50°C, 55°C, 60°C or 65°C, etc.

Optionally, a temperature of the third temperature zone drying is 70-95°C, such as 70°C, 75°C, 80°C, 85°C, 90°C or 95°C, etc.

In the present application, if the drying degree is too low, the material will be too soft and the strength will be poor, and if the drying degree is too high, the thermosetting resin will be over-cured and the magnetic sheet will be too brittle, which is not conducive to the subsequent processing.

As an optional technical solution, a preparation method for a soft magnetic alloy sheet includes:
(1) mixing a thermosetting resin, a thermoplastic resin, a dispersant, a solvent, a curing agent, a plasticizer, a curing accelerator and an insulation-coated soft magnetic alloy powder to obtain a casting slurry;
(2) degassing the casting slurry in step (1) for 5-20 min at a vacuum degree of -0.07 MPa to - 0.096 MPa to obtain a degassed slurry with a viscosity of 2000-3000 cps, performing casting treatment with a stirring speed of 3-5 rpm/min of a feeding system, and casting the degassed slurry with a blade clearance of 180-280 µm at a moving speed of 0.15-0.45 m/min, and then performing a first temperature zone drying, a second temperature zone drying and a third temperature zone drying sequentially to obtain the soft magnetic alloy sheet;
wherein in the casting slurry in step (1), a weight proportion of the insulation-coated soft magnetic alloy powder is 85-91wt%; a weight proportion of the thermosetting resin is 1.5-4wt%; a weight proportion of the thermoplastic resin is 1-2wt%; a weight proportion of the dispersant is 0-0.6wt%; a weight proportion of the solvent is 6-10wt%; a weight proportion of the curing agent is 0.5-0.7wt%; a weight proportion of the plasticizer is 0-0.6wt%; and a weight proportion of the curing accelerator is 0-0.6wt%.

In a second aspect, the present application provides a soft magnetic alloy sheet prepared by the preparation method for a soft magnetic alloy sheet according to the first aspect.

The soft magnetic alloy sheet provided by the present application has uniform film thickness, high saturation magnetic induction strength and low loss, and after low temperature baking and fully curing, it has a certain hardness and can withstand temperature above 160°C.

Optionally, a thickness of the soft magnetic alloy sheet is 75-200 µm, such as 75 µm, 80 µm, 90 µm, 100 µm, 110 µm, 120 µm, 130 µm, 140 µm, 150 µm, 160 µm, 170 µm, 180 µm, 190 µm or 200 µm, etc.

Optionally, a density of the soft magnetic alloy sheet is more than or equal to 4.0 g/mm³, such as 4 g/mm³, 4.5 g/mm³, 5 g/mm³, 5.5 g/mm³ or 6 g/mm³, etc.

In a third aspect, the present application also provides use of the soft magnetic alloy sheet according to the second aspect in a thin film power inductor.

Compared with the prior art, the present application has the beneficial effects below.

By mixing a thermosetting resin and other additives with a soft magnetic alloy powder and by casting-drying, the present application obtains a soft magnetic alloy sheet with high saturation magnetic induction strength and low loss, which has a certain hardness and temperature resistance above 160°C after low temperature baking and fully curing, so that the magnetic sheet has moderate film strength, flexible film quality and good consistency. Its advantage is that by using the high temperature curing characteristic of thermosetting resin, the magnetic sheet achieves hardening, avoiding the problem of increased loss caused by the failure of the insulation coating layer after high-temperature sintering in the traditional lamination process. The prepared soft magnetic alloy sheet has a magnetic storage capacity of more than or equal to 10.66 and a loss of less than or equal to 0.666, and has high strength and is not easy to break.

### BRIEF DESCRIPTION OF DRAWINGS

FIG. 1 is an SEM image of the air-contacting side of a soft magnetic alloy sheet provided in Example 1.
FIG. 2 is an SEM image of the air-contacting side of a soft magnetic alloy sheet provided in Example 1.
FIG. 3 is an SEM image of the section of a soft magnetic alloy sheet provided in Example 1.
FIG. 4 is an SEM image of the section of a soft magnetic alloy sheet provided in Example 1.
FIG. 5 is an SEM image of the surface of a cured soft magnetic alloy sheet provided in Example 1.
FIG. 6 is an SEM image of the surface of a cured soft magnetic alloy sheet provided in Example 1.
FIG. 7 is an SEM image of the section of a cured soft magnetic alloy sheet provided in Example 1.
FIG. 8 is an SEM image of the section of a cured soft magnetic alloy sheet provided in Example 1.

### DETAILED DESCRIPTION

The technical solutions of the present application are further described below by specific embodiments. It should be apparent to those skilled in the art that the embodiments are only used for a better understanding of the present application and should not be construed as the limitations of the present application.

### Example 1

This example provides a soft magnetic alloy sheet, the thickness of the magnetic sheet is 120 µm, and the density is 4.18 g/mm³.

The preparation method of the magnetic sheet is as follows:
(1) preparing a slurry: 86wt% of an insulation-coated iron-silicon-aluminum powder, 1.5wt% of polyvinyl butyral, 3wt% of a bisphenol A epoxy resin, 8wt% of an absolute ethanol-ethyl acetate mixed solvent, 0.5wt% of glyceryl trioleate, 0.4wt% of dioctyl phthalate, 0.5wt% of m-xylylenediamine and 0.1wt% of 2-methylimidazole were configured according to the above proportion, and a casting slurry was obtained,
   wherein the iron-silicon-aluminum powder with a medium particle size of 10 µm was coated with silica and phosphoric acid, in which a medium particle size of silica was 0.8 µm, a weight proportion of silica was 5wt%, and a weight proportion of phosphoric acid was 0.3wt%;
(2) degassing: the casting slurry was degassed by a vacuum degasser under -0.08 MPa for 10 min, and a viscosity was measured, and a degassed slurry with a viscosity of 2500 cps was obtained;
(3) casting: the degassed slurry was evenly coated on a PET film by a casting machine, during which a stirring rate of a feeding system was 4 rpm/min; a blade clearance was 250 µm, corresponding to a moving speed of 0.2 m/min; a first temperature zone drying, a second temperature zone drying and a third temperature zone drying were performed in turn, the first temperature zone was set as 25°C, the second temperature zone was set as 60°C, the third temperature zone was set as 85°C, an inlet-outlet air volume was 0.24 m³/min, and the soft magnetic alloy sheet was obtained.

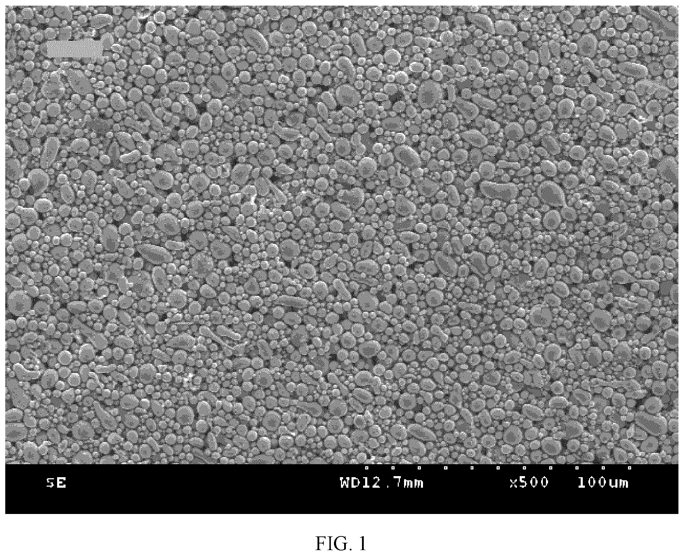

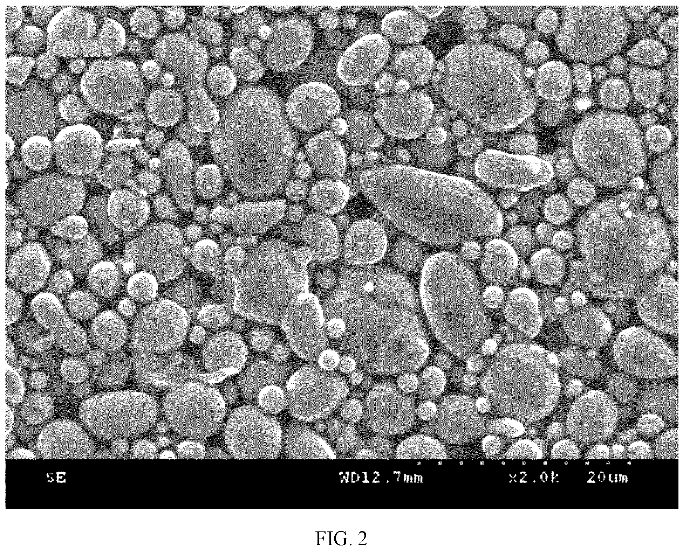

FIG. 1 is an SEM image at 500 times, FIG. 2 is an SEM image at 2000 times, and it can be seen that the magnetic sheet provided in the present application has good surface compactness and good stacking consistency.

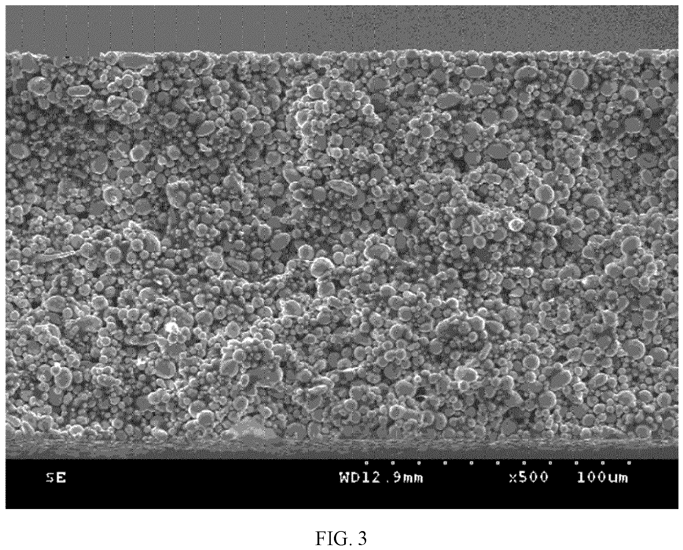

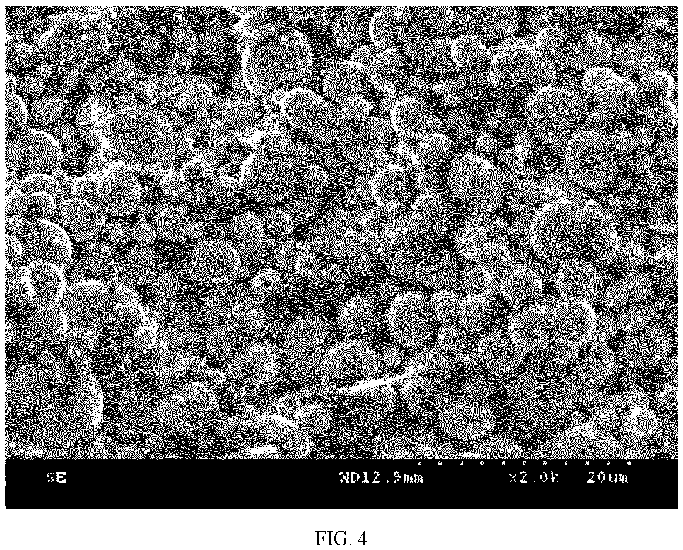

FIG. 3 is an SEM image at 500 times, FIG. 4 is an SEM image at 2000 times, and it can be seen that the section of the magnetic sheet provided in the present application still maintains good surface compactness and has good stacking consistency.

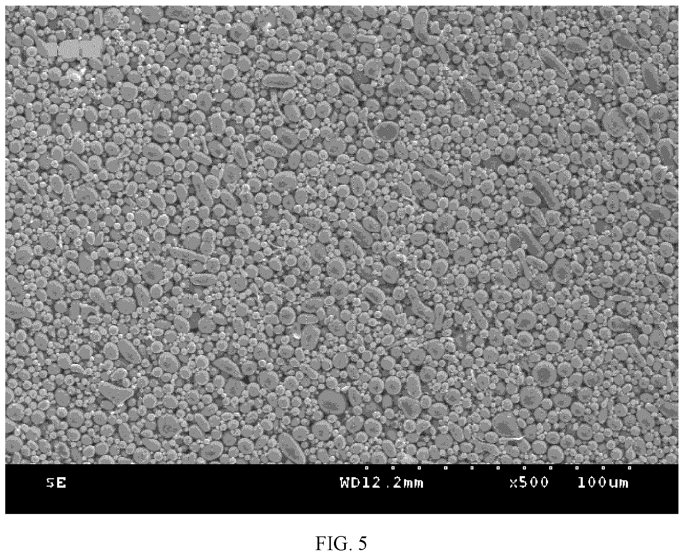

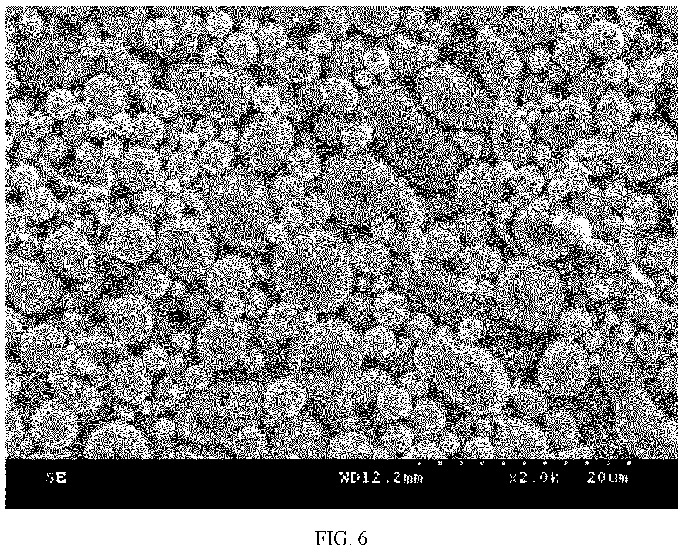

FIG. 5 is an SEM image at 500 times, FIG. 6 is an SEM image at 2000 times, and it can be seen that the magnetic sheet provided in the present application still maintains good surface compactness even after the high-temperature curing, and the stacking consistency is good.

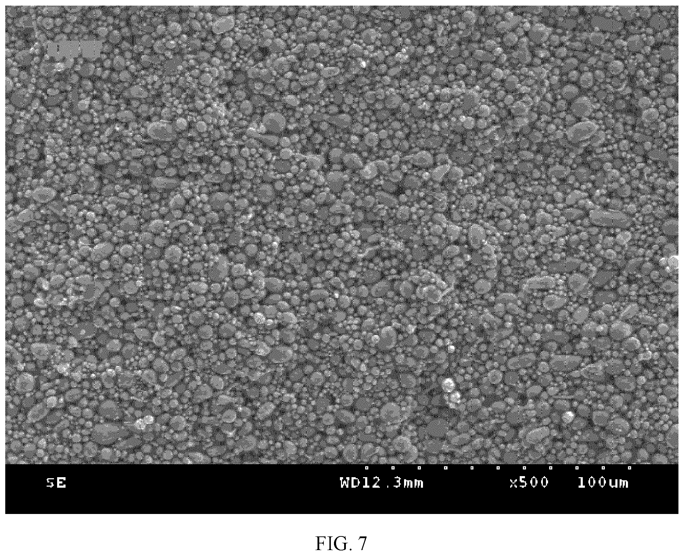

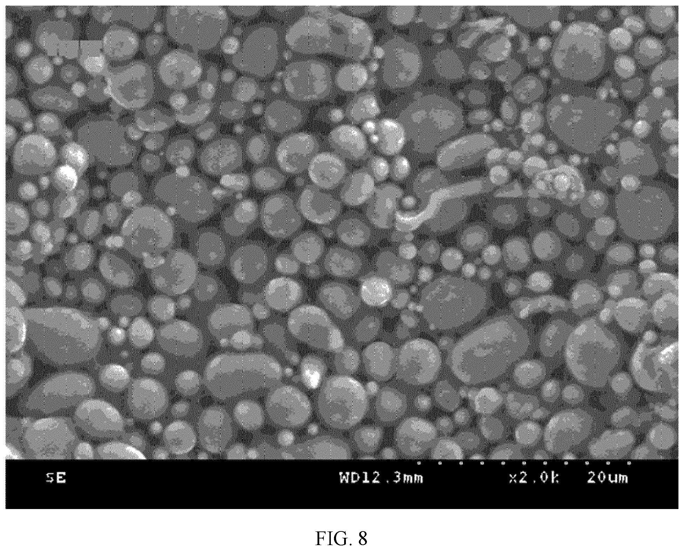

FIG. 7 is an SEM image at 500 times, FIG. 8 is an SEM image at 2000 times, and it can be seen that the magnetic sheet provided in the present application still maintains good surface compactness even after the high-temperature curing, and the stacking consistency is good.

Based on the comparison of FIGS. 1 to 8, it can be concluded that the soft magnetic alloy sheets provided in the present application maintain good compactness and stacking consistency whether or not by high-temperature curing; the magnetic sheet structure is stable, the ductility is good, and after high-temperature curing, no fracture is observed on the magnetic sheet.

### Example 2

This example provides a soft magnetic alloy sheet, the thickness of the magnetic sheet is 80 µm, and the density is 4.3 g/mm³.

The preparation method of the magnetic sheet is as follows:
(1) preparing a slurry: 91wt% of an insulation-coated iron-nickel powder, 1wt% of polymethyl methacrylate, 1.5wt% of a bisphenol F epoxy resin, 6wt% of absolute ethanol, and 0.5wt% of isophorone diamine were configured according to the above proportion, and a casting slurry was obtained,
   wherein the iron-nickel powder with a medium particle size of 15 µm was coated with silica and phosphoric acid, in which a medium particle size of silica was 0.5 µm, a weight proportion was 9wt%, and a weight proportion of phosphoric acid was 0.4wt%;
(2) degassing: the casting slurry was degassed by a vacuum degasser under -0.07 MPa for 20 min, and a viscosity was measured, and a degassed slurry with a viscosity of 3000 cps was obtained;
(3) casting: the degassed slurry was evenly coated on a PET film by a casting machine, during which a stirring rate of a feeding system was 5 rpm/min; a blade clearance was 200 µm, corresponding to a moving speed of 0.35 m/min; a first temperature zone drying, a second temperature zone drying and a third temperature zone drying were performed in turn, the first temperature zone was set as 35°C, the second temperature zone was set as 65°C, the third temperature zone was set as 90°C, an inlet-outlet air volume was 0.24 m³/min, and the soft magnetic alloy sheet was obtained.

### Example 3

This example provides a soft magnetic alloy sheet, the thickness of the magnetic sheet is 200 µm, and the density is 4.5 g/mm³.

The preparation method of the magnetic sheet is as follows:
(1) preparing a slurry: 82wt% of an insulation-coated iron-silicon-chromium powder, 2wt% of polymethyl methacrylate, 4wt% of a bisphenol A epoxy resin, 10wt% of an absolute ethanol-ethyl acetate mixed solvent, 0.45wt% of glyceryl trioleate, 0.6wt% of dioctyl phthalate, 0.7wt% of diethyltoluenediamine and 0.25wt% of salicylic acid were configured according to the above proportion, and a casting slurry was obtained,
   wherein the iron-silicon-chromium powder with a medium particle size of 6 µm was coated with silica and phosphoric acid, in which a medium particle size of silica was 0.5 µm, a weight proportion was 9wt%, and a weight proportion of phosphoric acid was 0.4wt%;
(2) degassing: the casting slurry was degassed by a vacuum degasser under -0.095 MPa for 5 min, and a viscosity was measured, and a degassed slurry with a viscosity of 2000 cps was obtained;
(3) casting: the degassed slurry was evenly coated on a PET film by a casting machine, during which a stirring rate of a feeding system was 3 rpm/min; a blade clearance was 280 µm, corresponding to a moving speed of 0.15 m/min; a first temperature zone drying, a second temperature zone drying and a third temperature zone drying were performed in turn, the first temperature zone was set as 25°C, the second temperature zone was set as 60°C, the third temperature zone was set as 85°C, an inlet-outlet air volume was 0.2 m³/min, and the soft magnetic alloy sheet was obtained.

### Example 4

The difference between this example and Example 1 was that in this example, 82wt% of an insulation-coated iron-silicon-aluminum powder, 2wt% of polyvinyl butyral, 4wt% of a bisphenol A epoxy resin, 10wt% of an absolute ethanol-ethyl acetate mixed solvent, 0.5wt% of glyceryl trioleate, 0.6wt% of dioctyl phthalate, 0.7wt% of m-xylylenediamine and 0.2wt% of 2-methylimidazole were configured according to the above proportion, and a casting slurry was obtained.

The other preparation method and parameters were consistent with those of Example 1.

### Example 5

The difference between this example and Example 1 was that in this example, 88wt% of an insulation-coated iron-silicon-aluminum powder, 1.5wt% of polyvinyl butyral, 3wt% of a bisphenol A epoxy resin, 6wt% of an absolute ethanol-ethyl acetate mixed solvent, 0.5wt% of glyceryl trioleate, 0.4wt% of dioctyl phthalate, 0.5wt% of m-xylylenediamine and 0.1wt% of 2-methylimidazole were configured according to the above proportion, and a casting slurry was obtained.

The other preparation method and parameters were consistent with those of Example 1.

### Example 6

The difference between this example and Example 1 was that in this example, 91wt% of an insulation-coated iron-silicon-aluminum powder, 1wt% of polyvinyl butyral, 1.5wt% of a bisphenol A epoxy resin, 6wt% of an absolute ethanol-ethyl acetate mixed solvent and 0.5wt% of m-xylylenediamine were configured according to the above proportion, and a casting slurry was obtained.

The other preparation method and parameters were consistent with those of Example 1.

### Comparative Example 1

The difference between this comparative example and Example 1 was that in this comparative example, the thermosetting resin bisphenol A epoxy resin was not added, and the weight proportion of the thermoplastic resin polyvinyl butyral was adjusted to 4.5wt%.

The other preparation method and parameters were consistent with those of Example 1.

### Comparative Example 2

The difference between this comparative example and Example 1 was that in this comparative example, the thermoplastic resin polyvinyl butyral was not added, and the weight proportion of the thermosetting resin bisphenol A epoxy resin was adjusted to 4.5wt%.

The other preparation method and parameters were consistent with those of Example 1.

### Comparative Example 3

The difference between this comparative example and Example 1 was that in this comparative example, the magnetic powder was ferrite material.

The other preparation method and parameters were consistent with those of Example 1.

The obtained soft magnetic alloy sheets prepared by Examples 1-5 and Comparative Examples 1-3 were cut into specified six-inch squares, then subjected to hot press lamination, and cured at a high temperature of 210°C for 4 h, and the performance of the cured magnetic sheet was tested.

Test standard: magnetic permeability test: the test frequency is 100 MHz, the environment is 25°C, and the test equipment is Agilent E4991A+16454A fixture. The results are shown in Table 1: (µ' and µ" represent the real part of the magnetic permeability and imaginary part of the magnetic permeability, respectively. The real part represents the magnetic storage capacity, and the imaginary part represents the loss.)

**Table 1**

| | Magnetic permeability µ'>10 | Magnetic permeability µ"≤0.8 | Strength (ultimate tensile strength > 10 N) | Brittleness (does not break when wound on a 3-inch diameter core) | Whether it becomes soft at 160°C after curing |
|---|---|---|---|---|---|
| Example 1 | 11.42 | 0.602 | OK | OK | NO |
| Example 2 | 12.82 | 0.692 | OK | OK | NO |
| Example 3 | 11.06 | 0.583 | OK | OK | NO |
| Example 4 | 10.66 | 0.502 | OK | OK | NO |
| Example 5 | 11.68 | 0.644 | OK | OK | NO |
| Example 6 | 11.96 | 0.666 | OK | OK | NO |
| Comparative Example 1 | 11.48 | 0.611 | OK | OK | Failed to be cured |
| Comparative Example 2 | Failed to form a film and cannot be tested | Failed to form a film and cannot be tested | - | - | NO |
| Comparative Example 3 | 13.66 | 12.58 | OK | OK | NO |

It can be seen from the data results of Examples 1 and 4-6 that in Example 4, when the solid content of the ferromagnetic alloy powder (i.e. the weight proportion) is relatively small, the magnetic permeability will be reduced accordingly.

It can be seen from the data results of Example 1 and Comparative Example 1 that in the process of preparing the soft magnetic alloy sheet, the magnetic sheet cannot be cured without the thermosetting resin.

It can be seen from the data results of Example 1 and Comparative Example 2 that in the process of preparing the soft magnetic alloy sheet, the magnetic sheet cannot form a film after being casted without the thermoplastic resin.

It can be seen from the data results of Example 1 and Comparative Example 3 that compared with the soft magnetic alloy powder, magnetic sheets prepared by other magnetic materials has large loss at high frequency, which cannot meet the use requirements at high frequency. And at the frequency of more than or equal to 1 MHz, the magnetic permeability of ferrite can drop sharply and the loss rises sharply, while the soft magnetic alloy material can still maintain high magnetic permeability and low loss at more than or equal to 100 MHz, which conforms to the trend of high-frequency applications.

In summary, for preparing a soft magnetic alloy sheet in the present application, a thermosetting resin, a thermoplastic resin and an insulation-coated soft magnetic alloy powder are combined, and those three materials synergize with each other; the casted magnetic sheet is easier to form a film, and has a supple texture, and the cured magnetic sheet can also maintain the strength even at 160°C; at the same time, the casting process is used to make the film thickness of the magnetic sheet uniform, and the magnetic sheet not only maintains a certain degree of flexibility and ductility, but also avoids being too brittle. Meanwhile, the formula used in the present application can give a high solid content to the slurry, thus avoiding improper casting process, which might results in poor film strength or even the failure in film formation, or the formed film is too brittle to be wound or to be processed subsequently. The soft magnetic alloy sheet prepared by the preparation method provided in the present application has high saturation magnetic induction strength and low loss, and it has a certain hardness and can withstand temperature above 160°C after being fully cured. The prepared soft magnetic alloy sheet has a magnetic storage capacity of more than or equal to 10.66 and a loss of less than or equal to 0.666, and the prepared soft magnetic alloy sheet has high strength, and is not easy to break.

The applicant declares that the above is only specific embodiments of the present application, and the protection scope of the present application is not limited to the embodiments.

## Claims

1. A preparation method for a soft magnetic alloy sheet, comprising:
(1) mixing a thermosetting resin, a thermoplastic resin, a solvent, a curing agent and a insulation-coated soft magnetic alloy powder to obtain a casting slurry;
(2) subjecting the casting slurry in step (1) to degassing and casting-drying treatment in turn to obtain the soft magnetic alloy sheet.

2. The preparation method for a soft magnetic alloy sheet according to claim 1, wherein the casting slurry in step (1) further comprises any one or a combination of at least two of a plasticizer, a dispersant or a curing accelerator.

3. The preparation method for a soft magnetic alloy sheet according to claim 1 or 2, wherein in the casting slurry in step (1), a weight proportion of the insulation-coated soft magnetic alloy powder is 82-91wt%.

4. The preparation method for a soft magnetic alloy sheet according to claim 3, wherein in the casting slurry in step (1), a weight proportion of the insulation-coated soft magnetic alloy powder is 85-91wt%;
optionally, in the casting slurry in step (1), a weight proportion of the thermosetting resin is 1.5-4wt%;
optionally, in the casting slurry in step (1), a weight proportion of the thermoplastic resin is 1-2wt%;
optionally, in the casting slurry in step (1), a weight proportion of the dispersant is 0-0.6wt%;
optionally, in the casting slurry in step (1), a weight proportion of the solvent is 6-10wt%;
optionally, in the casting slurry in step (1), a weight proportion of the curing agent is 0.5-0.7wt%;
optionally, in the casting slurry in step (1), a weight proportion of the plasticizer is 0-0.6wt%;
optionally, in the casting slurry in step (1), a weight proportion of the curing accelerator is 0-0.25wt%.

5. The preparation method for a soft magnetic alloy sheet according to claim 2, wherein the thermosetting resin in step (1) comprises a bisphenol A epoxy resin and/or a bisphenol F epoxy resin;
optionally, the thermoplastic resin in step (1) comprises polyvinyl butyral and/or polymethyl methacrylate;
optionally, the dispersant in step (1) comprises any one or a combination of at least two of castor oil, industrial fish oil or glyceryl trioleate;
optionally, the solvent in step (1) comprises any one or a combination of at least two of absolute ethanol, isopropanol, ethyl acetate or butanone;
optionally, the curing agent in step (1) comprises any one or a combination of at least two of m-xylylenediamine, isophorone diamine, diethyltoluenediamine or dicyandiamide;
optionally, the plasticizer comprises any one or a combination of at least two of dioctyl phthalate, dibutyl phthalate, or a polyether compound having a plurality of hydroxyl functional groups;
optionally, the curing accelerator comprises any one or a combination of at least two of 2-methylimidazole, 2-ethyl-4-methylimidazole or salicylic acid;
optionally, a medium particle size of the soft magnetic alloy powder in the insulation-coated soft magnetic alloy powder in step (1) is 4-15 µm;
optionally, the soft magnetic alloy powder in the insulation-coated soft magnetic alloy powder in step (1) comprises any one or a combination of at least two of an iron-nickel powder, an iron-silicon-aluminum powder or an iron-silicon-chromium powder.

6. The preparation method for a soft magnetic alloy sheet according to any one of claims 1 to 5, wherein a vacuum degree of the degassing in step (2) is -0.07 MPa to -0.096 MPa;
optionally, a time of the degassing in step (2) is 5-20 min;
optionally, a viscosity of the degassed slurry in step (2) is 2000-3000 cps;
optionally, a stirring speed of a feeding system for the casting treatment in step (2) is 3-5 rpm/min.

7. The preparation method for a soft magnetic alloy sheet according to any one of claims 1 to 6, wherein a thickness of the soft magnetic alloy sheet is 75-200 µm;
optionally, a moving speed of the casting treatment in step (2) is 0.15-0.45 m/min;
optionally, a blade clearance of the casting treatment in step (2) is 180-280 µm;
optionally, for the thickness of the soft magnetic alloy sheet being 75-85 µm, a blade clearance of the casting treatment is 180-220 µm, and a moving speed is 0.3-0.45 m/min;
optionally, for the thickness of the soft magnetic alloy sheet being 95-105 µm, a blade clearance of the casting treatment is 200-240 µm, and a moving speed is 0.2-0.35 m/min;
optionally, for the thickness of the soft magnetic alloy sheet being 115-125 µm, a blade clearance of the casting treatment is 230-280 µm, and a moving speed is 0.15-0.25 m/min.

8. The preparation method for a soft magnetic alloy sheet according to any one of claims 1 to 7, wherein an inlet-outlet air volume in the drying process is 0.2-0.25 m³/min;
optionally, the drying treatment comprises preforming a first temperature zone drying, a second temperature zone drying and a third temperature zone drying sequentially;
optionally, a temperature of the first temperature zone drying is 25-35°C;
optionally, a temperature of the second temperature zone drying is 50-65°C;
optionally, a temperature of the third temperature zone drying is 70-95°C.

9. The preparation method for a soft magnetic alloy sheet according to any one of claims 1 to 8, comprising:
(1) mixing a thermosetting resin, a thermoplastic resin, a dispersant, a solvent, a curing agent, a plasticizer, a curing accelerator and an insulation-coated soft magnetic alloy powder to obtain a casting slurry;
(2) degassing the casting slurry in step (1) for 5-20 min at a vacuum degree of -0.07 MPa to - 0.096 MPa to obtain a degassed slurry with a viscosity of 2000-3000 cps, performing casting treatment with a stirring speed of 3-5 rpm/min of a feeding system, and casting the degassed slurry with a blade clearance of 180-280 µm at a moving speed of 0.15-0.45 m/min, and then performing a first temperature zone drying, a second temperature zone drying and a third temperature zone drying sequentially to obtain the soft magnetic alloy sheet;
wherein in the casting slurry in step (1), a weight proportion of the insulation-coated soft magnetic alloy powder is 85-91wt%; a weight proportion of the thermosetting resin is 1.5-4wt%; a weight proportion of the thermoplastic resin is 1-2wt%; a weight proportion of the dispersant is 0-0.6wt%; a weight proportion of the solvent is 6-10wt%; a weight proportion of the curing agent is 0.5-0.7wt%; a weight proportion of the plasticizer is 0-0.6wt%; a weight proportion of the curing accelerator is 0-0.6wt%.

10. A soft magnetic alloy sheet, which is prepared by the preparation method for a soft magnetic alloy sheet according to any one of claims 1 to 9.

11. The soft magnetic alloy sheet according to claim 10, wherein a thickness of the soft magnetic alloy sheet is 75-200 µm;
optionally, a density of the soft magnetic alloy sheet is more than or equal to 4.0 g/mm³.

12. Use of the soft magnetic alloy sheet according to claim 10 or 11 in a thin film power inductor.
